# EUROPÄISCHE PATENTSCHRIFT

(11) **EP 1 585 661 B1**
(45) Veröffentlichungstag und Bekanntmachung des Hinweises auf die Patenterteilung: **24.01.2007**
(21) Anmeldenummer: 03795934.3
(22) Anmeldetag: 19.12.2003
(51) Int. Cl.: B62D 3/12

(54) **ZAHNSTANGENLENKUNG**
RACK-AND-PINION STEERING MECHANISM
DIRECTION A CREMAILLERE

(30) Priorität: 24.01.2003 DE 10302766
(43) Veröffentlichungstag der Anmeldung: 19.10.2005
(73) Patentinhaber: Schaeffler KG, 91074 Herzogenaurach (DE)
(72) Erfinder: ZERNICKEL, Alexander, 91074 Herzogenaurach (DE); WILLARED, Stefan, 91352 Pautzfeld (DE)
(86) Internationale Anmeldenummer: PCT/EP2003/014585
(87) Internationale Veröffentlichungsnummer: WO 2004/065194

(56) Entgegenhaltungen:
- DE-A- 2 913 641
- DE-U- 8 203 943
- US-A- 4 215 591
- US-A1- 2002 152 825

## Beschreibung

### Anwendungsgebiet der Erfindung

Die Erfindung betrifft nach den Oberbegriffen der unabhängigen Ansprüche 1, 12 und 13 eine Zahnstangenlenkung für ein Kraftfahrzeug mit einem Lenkgehäuse, in dem eine Zahnstange längsverschieblich gelagert ist.

### Hintergrund der Erfindung

Derartige Zahnstangenlenkungen sind aus dem Stand der Technik seit langem vorbekannt. Bei diesen Lenkungen wird die Zahnstange in Längsrichtung verschieblich in einem Lenkgehäuse geführt. Ein in dem Lenkgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt. Der Eingriff des Ritzels in die Zahnstange wird spielfrei gehalten, indem ein gegenüber dem Ritzel an der Zahnstange anliegendes Druckstück unter Federvorspannung die Zahnstange gegen das Ritzel drückt. Das Druckstück muss dabei zum einen die erforderliche Anpresskraft übertragen können und zum anderen eine Lagerfläche bieten, die bei Verschiebung der Zahnstange auf dem Druckstück keine nennenswerten Reibkräfte und keinen wesentlichen Verschleiß hervorruft.

Ein derart gattungsgemäß ausgebildetes Druckstück ist aus der DE 82 03 943 U1 vorbekannt. Gemäß Figur 5 dieser Vorveröffentlichung wird die rollende Reibung zwischen Zahnstange und Druckstück derart realisiert, dass im Druckstück zwei Wälzlager angeordnet sind. Jedes dieser Wälzlager ist auf einem zugeordneten Lagerzapfen gelagert, die wiederum ihrerseits im Druckstück befestigt sind. Die Achsen der Lagerzapfen bilden einen eingeschlossenen Winkel von weniger als 180°, so dass die Lageraußenringe der beiden Wälzlager eine V-förmige Fläche bilden, in der die V-förmig ausgestaltete Zahnstange aufliegt.

Nachteilig dabei ist, dass eine solch komplizierte Art eines wälzgelagerten Druckstückes einen großen radialen und axialen Bauraum benötigt. Darüber hinaus werden eine Vielzahl von Einzelbauteilen benötigt, die die Montage der gesamten Druckstückeinheit erschweren.

In diesem Zusammenhang ist aus der US 2002/0152825 A1 ein weiteres Druckstück für eine Zahnstangenlenkung bekannt. Im Druckstück sind beabstandet voneinander zwei drehbare Rollen angeordnet, die zwischen sich die Zahnstange aufnehmen und abstützten. Nachteilig dabei ist einerseits, dass die drehbaren Rollen auf einem Bolzen ohne Wälzkörper angeordnet sind und demzufolge eine höhere Reibung aufweisen. Anderseits ist weiter von Nachteil, dass diese Rollen im Druckstück aufwendig in Taschen gehalten sind, so dass die Montage der gesamten Druckstückeinheit sehr kompliziert ist.

### Zusammenfassung der Erfindung

Ausgehend von den Nachteilen des bekannten Standes der Technik ist es daher Aufgabe der Erfindung, ein gattungsgemäßes Druckstück für ein Zahnstangenlenkgetriebe bereitzustellen, das sich relativ einfach fertigen lässt.

Erfindungsgemäß wird diese Aufgabe nach dem kennzeichnenden Teil von Anspruch 1 in Verbindung mit dessen Oberbegriff dadurch gelöst, dass das Druckstück zwei gegenüberliegende, zu einander geneigte Tragflächen aufweist, wobei in den gegenüberliegenden Tragflächen des Druckstückes wenigstens je ein Axialwälzlager mit jeweils zwei Laufscheiben und einem dazwischen befindlichen Wälzkörpersatz angeordnet ist, dessen eine Laufscheibe drehfest im Druckstück gehalten ist und dessen andere drehbare Laufscheibe gegenüber der Tragfläche der Zahnstange unter einem bestimmten Winkel geneigt verläuft, so dass zwischen der Tragfläche der Zahnstange und der drehbaren Laufscheibe ein Berührungspunkt gebildet ist, wobei die drehbare Laufscheibe kalottenförmig ausgebildet ist und mit ihrer konvexen Kalottenfläche punktförmig an der Tragfläche der Zahnstange anliegt.

Der Vorteil der erfindungsgemäßen Lösung liegt insbesondere darin, dass zur Reibungsverminderung zwischen Druckstück und Zahnstange deren Design nicht verändert werden muss. Es ist lediglich erforderlich, in den geneigten Tragflächen der an sich bekannten Druckstücke Axialwälzlager einzusetzen. Derartige Axialwälzlager sind in mannigfachen Ausführungsvarianten in unterschiedlichen Gattungen und Formen als kostengünstiges Zukaufteil erhältlich. Ein weiterer Vorteil der Realisierung der an sich bekannten rollenden Reibung zwischen Druckstück und Zahnstange besteht darin, dass im Vergleich zu den Sonderausführungen nach dem bekannten Stand der Technik erheblich Bauraum eingespart werden kann. Dadurch bedingt sind die erfindungsgemäßen Zahnstangenlenkungen kostengünstiger und einfacher herstellbar.

Weitere vorteilhafte Ausführungsvarianten der Erfindung sind in den Ansprüchen 2 bis 14 beschrieben.

Nach Anspruch 2 ist vorgesehen, dass die Zahnstange ein Y-förmiges Profil aufweist. Durch dieses Profil der Zahnstange ist eine besonders stabile Verbindung zwischen Druckstück und Zahnstange realisiert.

Nach anderen Merkmalen der Erfindung gemäß den Ansprüchen 3 und 4 soll das Axialwälzlager ein Kugellager oder ein Nadellager sein.

Nach einem weiteren zusätzlichen Merkmal gemäß Anspruch 5 soll die drehfest im Druckstück angeordnete Laufscheibe des Kugellagers als eine Büchse ausgebildet sein, die mit ihrem Rand die kalottenförmig ausgebildete Laufscheibe umgreift.

Aus Anspruch 6 geht hervor, dass das Axialwälzlager als ein Axialschrägnadellager ausgebildet ist, dessen Lagernadeln in einem Käfig geführt sind.

Nach einem anderen zusätzlichen Merkmal gemäß Anspruch 7 soll die drehbare Laufscheibe des Kugellagers pilzförmig mit einem Schaft und einer konvexen Kalottenfläche ausgebildet sein, wobei der Schaft von einer Büchse aufgenommen ist, deren Nadelkranz den Schaft umschließt.

Aus Anspruch 8 geht hervor, dass die Laufscheiben des Axialwälzlagers durch ein Halteelement miteinander verbunden sind.

Nach den Ansprüchen 9 und 10 soll das Axialwälzlager im Druckstück entweder in eine Sacklochbohrung eingesetzt oder in eine durchgehende Bohrung eingepresst sein.

Nach Anspruch 11 ist vorgesehen, dass die Bestandteile der Axialwälzlager wenigstens teilweise durch einen spanlosen Formgebungsprozess hergestellt sind.

Aus dem zweiten unabhängigen Anspruch 12 geht hervor, dass das Druckstück zwei gegenüberliegende, zu einander geneigte Tragflächen aufweist, wobei in den gegenüberliegenden Tragflächen des Druckstückes wenigstens je ein Axialgleitlager mit jeweils zwei Laufscheiben aufgenommen ist, dessen eine Laufscheibe drehfest im Druckstück gehalten ist und dessen andere Laufscheibe gegenüber der Tragfläche der Zahnstange unter einem bestimmten Winkel geneigt verläuft, so dass zwischen der Tragfläche der Zahnstange und der drehbaren Laufscheibe ein Berührungspunkt gebildet ist, wobei die drehbare Laufscheibe pilzförmig mit einem Schaft und einer konvexen Kalottenfläche ausgebildet ist, die drehfeste Laufscheibe als eine Büchse ausgebildet ist, deren Boden mit einem axial gerichteten Vorsprung versehen ist, wobei der axial gerichtete Vorsprung am Boden des Schaftes anliegt und zwischen einer Mantelfläche des Schaftes und der Büchse Lagernadeln angeordnet sind.

Nach dem dritten unabhängigen Anspruch 13 wird die Aufgabe auch dadurch gelöst, dass bei einer Zahnstange mit einer der Verzahnung gegenüberliegenden zylindrischen Gestalt das Druckstück zwei gegenüberliegende, zu einander geneigten Tragflächen aufweist, wobei in den Tragflächen wenigstens je ein Axialwälzlager mit jeweils zwei Laufscheiben und einem dazwischen befindlichen Wälzkörpersatz angeordnet ist, dessen eine Laufscheibe drehfest im Druckstück gehalten ist und dessen andere drehbare Laufscheibe mit der Zahnstange einen Berührungspunkt bildet, wobei die drehbare Laufscheibe kalottenförmig ausgebildet ist und mit ihrer konvexen Kalottenfläche punktförmig an der Tragfläche der Zahnstange anliegt.

Schließlich soll nach einem letzten Merkmal der Erfindung nach Anspruch 14 die zylindrische bzw. bogenförmige Zahnstange mit einer dem Profil der drehbaren Laufscheibe angepassten Längsausnehmung versehen sein. Bei Gestaltung dieser Längsausnehmung ist wiederum darauf zu achten, dass zwischen Zahnstange und drehbarer Laufscheibe ein Berührungspunkt gebildet ist. Durch diese Maßnahme wird eine exaktere Führung der Zahnstange erreicht und Torsionsmomente werden sicher abgestützt, so dass ein Verdrehen der Zahnstange in axialer Richtung verhindert ist.

Die Erfindung wird an nachstehenden Ausführungsbeispielen näher erläutert.

### Kurze Beschreibung der Zeichnungen

Es zeigen:
- Figur 1: einen teilweisen Längsschnitt durch ein erfindungsgemäß ausgebildetes Zahnstangengetriebe,
- Figuren 2, 3, 4 und 5: einen Längsschnitt durch erfindungsgemäß ausgebildete Druckstückeinheiten ohne und mit zugehöriger Zahnstange,
- Figuren 6 und 7: einen Längsschnitt durch erfindungsgemäß ausgebildete Axialwälzlager,
- Figuren 8 und 9: einen Längsschnitt durch weitere Varianten einer erfindungsgemäß ausgebildeten Druckstückeinheit und
- Figur 10: einen Längsschnitt durch eine Druckstückeinheit mit Längsausnehmung der Zahnstange

### Ausführliche Beschreibung der Zeichnungen

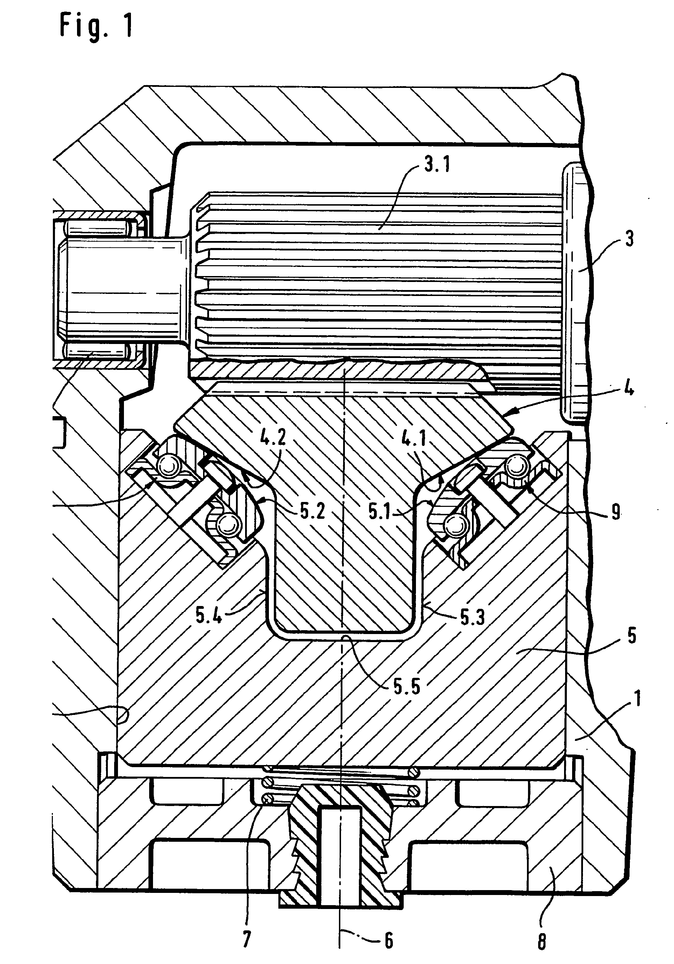

Wie aus Figur 1 ersichtlich, ist in einem Lenkgehäuse 1 über ein linksseitig angeordnetes Nadellager 2 und ein rechtsseitig nicht sichtbares weiteres Wälzlager eine Lenkspindel 3 gelagert, deren Ritzel 3.1 mit einer Zahnstange 4 kämmt. Bei einer Drehung der Lenkspindel 3 wird die Zahnstange 4 seitlich verlagert und bewirkt über nicht dargestellte Spurstangen und Achsschenkel zu einer Verschwenkung der ebenfalls nicht dargestellten Räder eines Kraftfahrzeuges.

Die Zahnstange 4 ist Y-förmig ausgebildet und weist zwei Tragflächen 4.1, 4.2 auf, die symmetrisch unter einem Winkel gegen die Verzahnungsebene von Ritzel 3.1 und Zahnstange 4 geneigt sind. In einer Aufnahmebohrung 1.1 des Lenkgehäuses 1 ist ein Druckstück 5 aufgenommen und in dieser entlang einer Achse 6 verschiebbar angeordnet. Das Druckstück 5 wird an seiner Unterseite von einer Feder 7 beaufschlagt, die sich mit ihrem einen Ende an einem Boden 8 abstützt, der in die abgestufte Aufnahmebohrung 1.1 des Lenkgehäuses 1 eingesetzt ist. Das Druckstück 5 weist ein Profil auf, das dem Negativ der Y-förmigen Zahnstange 4 entspricht, d.h., es ist dem Profil der Zahnstange 4 angepaßt. Es hat zwei unter einem Winkel symmetrisch zueinander geneigte Tragflächen 5.1, 5.2, die in zwei senkrecht abfallende, parallel zur Achse 6 verlaufende Flanken 5.3, 5.4 übergehen und durch die rechtwinklig zur Achse 6 angeordnete Grundfläche 5.5 miteinander verbunden sind.

Wie die Figuren 1, 2 und 3 weiter zeigen, ist in den geneigten Tragflächen 5.1, 5.2 des Druckstückes 5 je ein Kugellager 9 eingesetzt, das aus zwei Laufscheiben 9.1, 9.2 besteht, zwischen denen Lagerkugeln 9.3 abwälzen. Die Laufscheibe 9.2 ist in einer Sacklochbohrung 5.6 fest eingepresst und mit der beweglichen Laufscheibe 9.1 über ein Halteelement 9.4 in Form eines Bolzens verbunden. Wie insbesondere aus Figur 3 ersichtlich, ist die kalottenförmig gestaltete Laufscheibe 9.1 mit ihrer konvexen Kalottenfläche unter einem Winkel α geneigt angeordnet, so dass je ein Berührungspunkt 9.5 zwischen der Laufscheibe 9.1 und den Tragflächen 4.1, 4.2 gebildet ist. Der Neigungswinkel α wird von der Lagermittelachse 9.6 und der Normalen 9.7 zu den Tragflächen 4.1, 4.2 der Zahnstange 4 gebildet. Durch diese Verkippung um den Winkel α ist ein mit a bezeichneter Drallhebelabstand gebildet, der die Rotation der Laufscheibe 9.1 erst ermöglicht. Bei einer seitlichen Verlagerung der Zahn-Zahnstange 4 werden die beiden beweglichen Laufscheiben 9.1 der Kugellager 9 um ihre Lagerachse in Rotation versetzt.

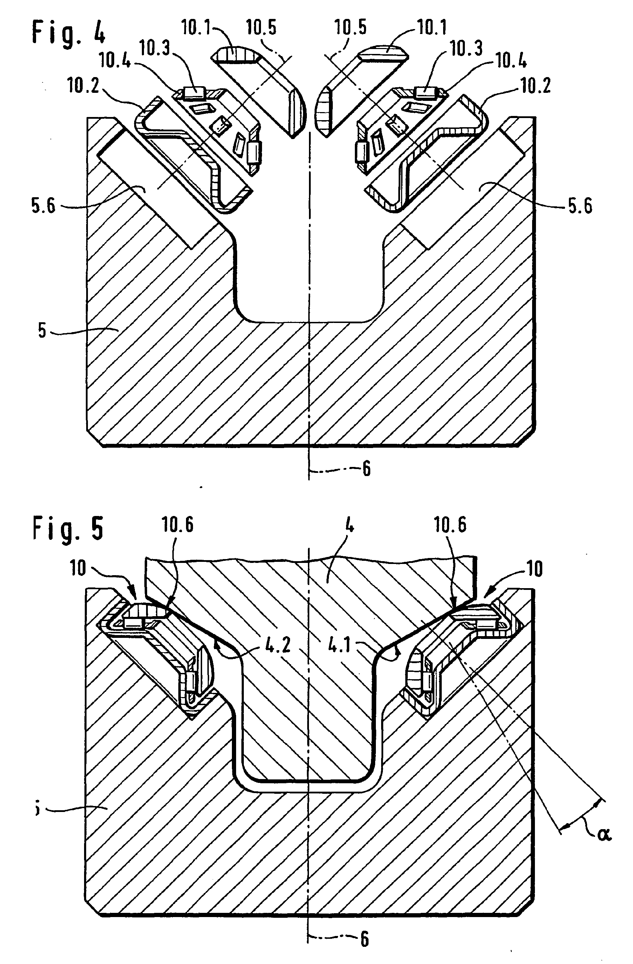

Das in den Figuren 4 und 5 gezeigte Axialschrägnadellager 10 besitzt wiederum eine kalottenförmig gestaltete bewegliche Laufscheibe 10.1 und eine drehfest in der Sacklochbohrung 5.6 verpresste Laufscheibe 10.2. Zwischen beiden ist ein aus Lagernadeln 10.3 und Lagerkäfig 10.4 bestehender Nadelkranz angeordnet, wobei die Lagernadeln 10.3 unter einem Winkel geneigt verlaufend zur Lagermittelachse 10.5 angeordnet sind. Die bewegliche Laufscheibe 10.1 ist wiederum in der beschriebenen Weise um den Winkel α geneigt verlaufend angeordnet, so dass sich je ein Berührungspunkt 10.6 zwischen den Tragflächen 4.1, 4.2 der Zahnstange 4 und den beiden Laufscheiben 10.1 ergibt.

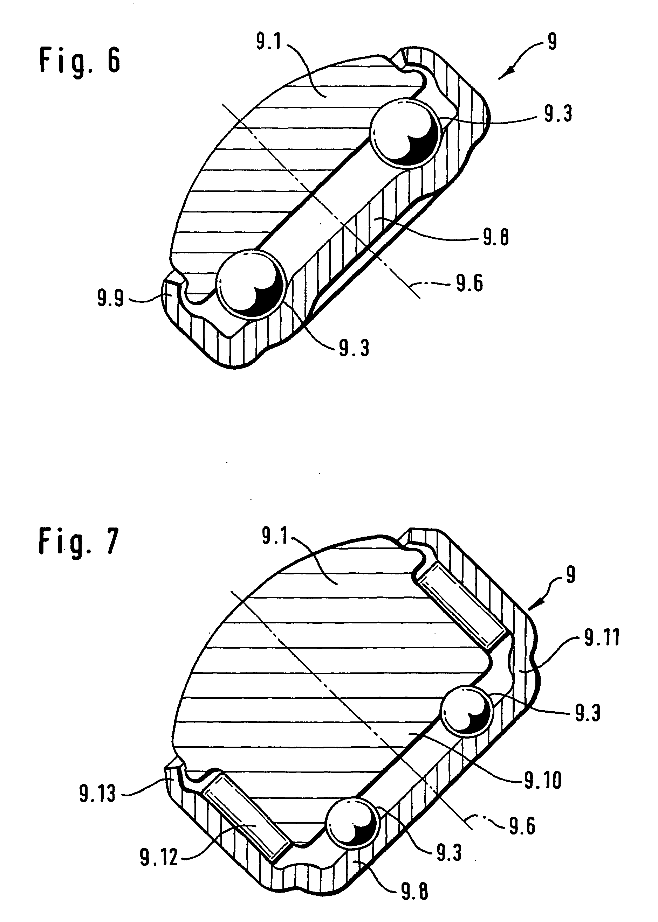

Das in Figur 6 gezeigte Kugellager 9 zeichnet sich dadurch aus, dass die im Druckstück 5 drehfest angeordnete Laufscheibe als eine Büchse 9.8 ausgebildet ist, die mit ihrem Rand 9.9 die kalottenförmig ausgebildete Laufscheibe 9.1 umfasst, so dass eine unverlierbare Baueinheit gebildet ist. Diese besteht aus der Büchse 9.8, der Laufscheibe 9.1 und den dazwischen angeordneten Lagerkugeln 9.3.

Das in Figur 7 dargestellte Kugellager 9 zeichnet sich dadurch aus, dass die drehbare Laufscheibe 9.1 pilzförmig mit einem Schaft 9.10 und einer konvexen Kalottenfläche ausgebildet ist. Der Schaft 9.10 wird von einer Büchse 9.11 aufgenommen, deren oberer Rand 9.13 die konvexe Kalottenfläche der Laufscheibe 9.1 umschließt. Auf diese Weise ist eine wiederum unverlierbare Baueinheit gebildet. Zwischen der Bodenfläche des Schaftes 9.10 und dem Boden der Büchse 9.11 sind Lagerkugeln 9.3 angeordnet, die den axialen Druck aufnehmen. Zwischen der Mantelfläche des Schaftes 9.10 und der inneren Mantelfläche des Randes 9.13 der Büchse 9.11 ist ein Nadelkranz 9.12 angeordnet, der die Laufscheibe 9.1 in radialer Richtung führt. Demnach liegt in diesem Ausführungsbeispiel ein kombiniertes Axial-Radial-Lager vor.

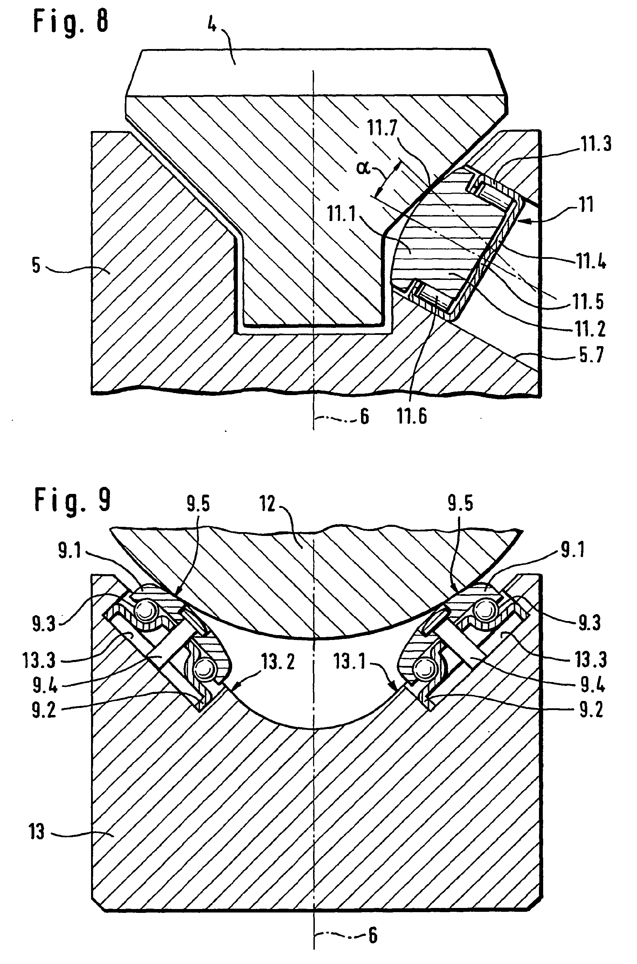

Bei der in Figur 8 dargestellten Zahnstangenlenkung, die den Inhalt des zweiten unabhängigen Anspruchs 13 und des davon abhängigen Anspruchs 14 wiedergibt, werden die auftretenden axialen Kräfte nicht durch Roll-, sondern durch Gleitreibung aufgenommen. Die drehbare Laufscheibe 11.1 ist pilzförmig gestaltet, d. h., sie besitzt ebenfalls eine konvexe Kalottenfläche und einen Schaft 11.2. Die in der durchgehenden Bohrung 5.7 des Druckstückes 5 drehfest angeordnete Laufscheibe ist als eine Büchse 11.3 ausgebildet, deren Boden 11.4 mit einem axial gerichteten Vorsprung 11.5 versehen ist. Dieser liegt an der Bodenfläche des Schaftes 11.2 an und nimmt somit die axialen Kräfte auf. Der Vorteil der durchgehenden Bohrung 5.7 gegenüber der Sacklochbohrung 5.6 liegt darin, dass Toleranzen durch eine unterschiedliche Lage des eingebrachten Lagers in einfacher Weise ausgeglichen werden können. Zwischen der Mantelfläche des Schaftes 11.2 und der inneren Mantelfläche der Büchse 11.3 sind Lagernadeln 11.6 angeordnet. Auch bei dieser Ausführungsvariante ist die drehbare Laufscheibe 11.1 unter den Winkel α geneigt angeordnet, so dass sich je ein Berührungspunkt 11.7 zwischen drehbarer Laufscheibe 11.1 und Tragfläche 4.1, 4.2 der Zahnstange 4 ergibt. Auf diese Weise ist ein kombiniertes Axial-Radiallager gebildet, wobei die axialen Kräfte durch den Vorsprung 11.5 und die radialen Kräfte durch die Lagernadeln 11.6 abgeleitet werden. Aus Gründen einer vereinfachten Darstellung wurde jedoch nur rechtsseitig ein Lager dargestellt.

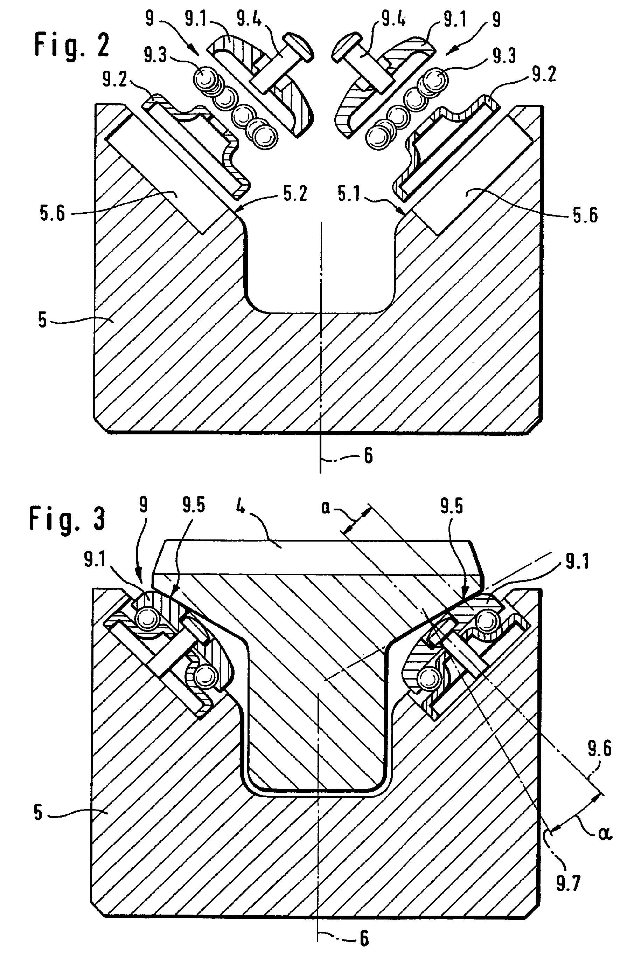

Bei der in Figur 9 dargestellten Zahnstangenlenkung, die den Inhalt des dritten unabhängigen Anspruchs 15 wiedergibt, weist die Zahnstange 12 an ihrer der Verzahnung mit dem Ritzel 3.1 gegenüberliegenden Seite eine zylindrische bzw. bogenförmige Gestalt auf, dass heißt, der der Verzahnung abgewandte Rücken der Zahnstange 12 ist kreisbogenförmig ausgebildet. Das zugehörige Druckstück 13 ist dem Profil der Zahnstange angepasst und hat im Schnitt gesehen eine U-förmige Gestalt, deren gegenüberliegende Tragflächen 13.1, 13.2 je eine Sacklochbohrung 13.3 aufweist, in der je ein Kugellager 9 untergebracht ist. Auf die genaue Beschreibung des Lagers 9 kann an dieser Stelle verzichtet werden, weil ausführlich bereits bei den Figuren 2 und 3 erfolgt. Bedingt durch die kreisbogenförmige Gestalt des Rückens der Zahnstange 12 ist beidseitig je ein Berührungspunkt 9.5 zwischen Zahnstange 12 und drehbarer Laufscheibe 9.1 gebildet. Auch in diesem Fall ist es denkbar, daß anstelle eines Axialwälzlagers ein Axialgleitlager eingesetzt werden kann.

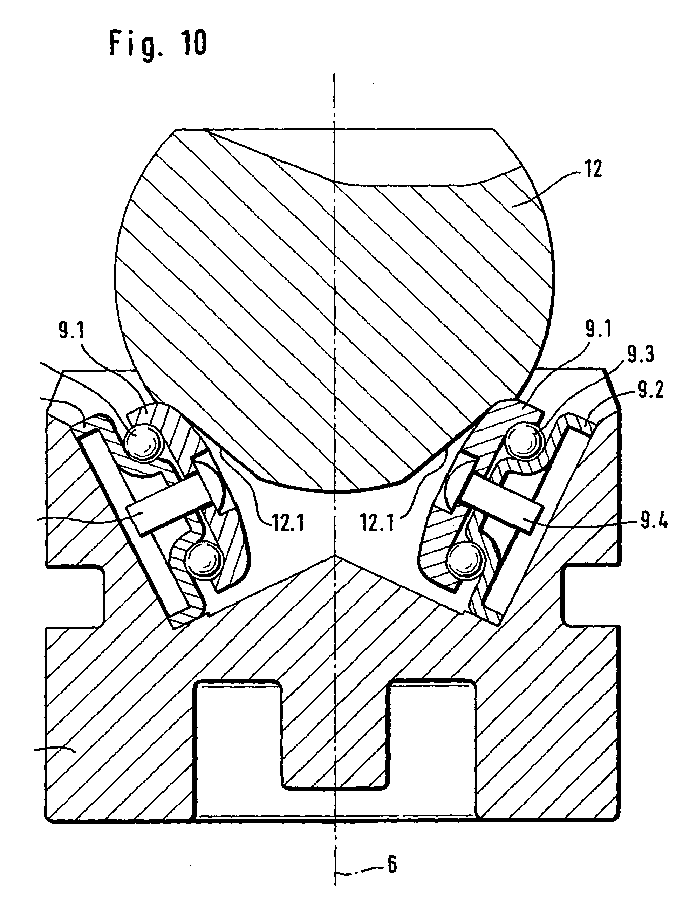

Wie aus Figur 10 ersichtlich, ist die Zahnstange 12 beidseitig mit je einer Längsausnehmung 12.1 versehen, in der die drehbare Laufscheibe 9.1 des Kugellagers 9 geführt ist. Dabei ist das Profil der Längsausnehmung 12.1 dem jeweiligen Profil der eingesetzten Laufscheibe 9.1 angepaßt. Auf diese Weise ist eine verbesserte Führung der Zahnstange 12 realisiert. Auftretende Torsionsmomente werden sicher abgestützt, so dass eine Verformung der Zahnstange in axialer Richtung verhindert ist.

### Bezugszeichen

- 1: Lenkgehäuse
- 1.1: Aufnahmebohrung
- 2: Nadellager
- 3: Lenkspindel
- 3.1: Ritzel
- 4: Zahnstange
- 4.1: Tragfläche
- 4.2: Tragfläche
- 5: Druckstück
- 5.1: Tragfläche
- 5.2: Tragfläche
- 5.3: Flanke
- 5.4: Flanke
- 5.5: Grundfläche
- 5.6: Sacklochbohrung
- 5.7: durchgehende Bohrung
- 6: Achse
- 7: Feder
- 8: Boden
- 9: Kugellager
- 9.1: Laufscheibe
- 9.2: Laufscheibe
- 9.3: Lagerkugel
- 9.4: Halteelement
- 9.5: Berührungspunkt
- 9.6: Lagermittelachse
- 9.7: Normale
- 9.8: Büchse
- 9.9: Rand
- 9.10: Schaft
- 9.11: Büchse
- 9.12: Nadelkranz
- 9.13: Rand
- 10: Axialschrägnadellager
- 10.1: Laufscheibe
- 10.2: Laufscheibe
- 10.3: Lagernadel
- 10.4: Käfig
- 10.5: Lagermittelachse
- 10.6: Berührungspunkt
- 11: Axiallager
- 11.1: Laufscheibe
- 11.2: Schaft
- 11.3: Büchse
- 11.4: Boden
- 11.5: Vorsprung
- 11.6: Lagernadel
- 11.7: Berührungspunkt
- 12: Zahnstange
- 12.1: Längsausnehmung
- 13: Druckstück
- 13.1: Tragfläche
- 13.2: Tragfläche
- 13.3: Sacklochbohrung

- α: Neigungswinkel
- a: Drallhebel

## Patentansprüche

1. Zahnstangenlenkung für ein Kraftfahrzeug mit einem Lenkgehäuse (1), in dem eine Zahnstange (4) längsverschieblich gelagert ist, wobei die Zahnstange (4) eine prismatische Gestalt mit zwei Tragflächen (4.1, 4.2) aufweist, die symmetrisch zur Verzahnung unter einem Winkel gegen die Verzahnungsebene geneigt sind, sowie mit einem mit der Zahnstange (4) kämmenden Ritzel (3.1) und einem Druckstück (5), das auf der der Eingriffsseite mit dem Zahnritzel (3.1) gegenüberliegenden Seite der Zahnstange (4) angeordnet ist und eine Gegendruckfläche aufweist, die ohne zu gleiten auf den Tragflächen (4.1, 4.2) der Zahnstange (4) abrollt, wobei das Druckstück (5) mit Hilfe einer Feder (7) in axialer Richtung gegen die Zahnstange (4) vorgespannt ist, **dadurch gekennzeichnet, dass** das Druckstück (5) zwei gegenüberliegende, zu einander geneigte Tragflächen (5.1, 5.2) aufweist, wobei in den gegenüberliegenden Tragflächen (5.1, 5.2) des Druckstückes (5) wenigstens je ein Axialwälzlager (9, 10) mit jeweils zwei Laufscheiben (9.1, 9.2, 10.1, 10.2) und einem dazwischen befindlichen Wälzkörpersatz (9.3, 10.3) angeordnet ist, dessen eine Laufscheibe (9.2, 10.2) drehfest im Druckstück (5) gehalten ist und dessen andere drehbare Laufscheibe (9.1, 10.1) gegenüber der Tragfläche (4.1, 4.2) der Zahnstange (4) unter einem bestimmten Winkel α geneigt verläuft, so dass zwischen der Tragfläche (4.1, 4.2) der Zahnstange (4) und der drehbaren Laufscheibe (9.1, 10.1) ein Berührungspunkt (9.5, 10.6) gebildet ist, wobei die drehbare Laufscheibe (9.1, 10,1) kalottenförmig ausgebildet ist und mit ihrer konvexen Kalottenfläche punktförmig an der Tragfläche (4.1, 4.2) der Zahnstange (4) anliegt.

2. Zahnstangenlenkunng nach Anspruch 1, **dadurch gekennzeichnet, dass** die Zahnstange (4) ein Y-förmiges Profil aufweist.

3. Zahnstangenlenkung nach Anspruch 1, **dadurch gekennzeichnet, dass** das Axialwälzlager ein Kugellager (9) ist.

4. Zahnstangenlenkung nach Anspruch 1, **dadurch gekennzeichnet, dass** das Axialwälzlager ein Nadellager ist.

5. Zahnstangenlenkung nach Anspruch 3, **dadurch gekennzeichnet, dass** die drehfest im Druckstück (5) angeordnete Laufscheibe des Kugellagers (9) als eine Büchse (9.8) ausgebildet ist, die mit ihrem Rand (9.9) die kalottenförmig ausgebildete Laufscheibe (9.1) umgreift.

6. Zahnstangenlenkung nach Anspruch 4, **dadurch gekennzeichnet, dass** das Axialwälzlager als ein Axialschrägnadellager (10) ausgebildet ist, dessen Lagernadeln (10.3) in einem Käfig (10.4) geführt sind.

7. Zahnstangenlenkung nach Anspruch 3, **dadurch gekennzeichnet, dass** die drehbare Laufscheibe (9.1) des Kugellagers (9) pilzförmig mit einem Schaft (9.10) und einer konvexen Kalottenfläche ausgebildet ist, wobei der Schaft (9.10) von einer Büchse (9.11) aufgenommen ist, deren Nadelkranz (9.12) den Schaft (9.10) umschließt.

8. Zahnstangenlenkung nach Anspruch 1, **dadurch gekennzeichnet, dass** die Laufscheiben (9.1,9.2) des Axialwälzlagers (9) durch ein Halteelement (9.4) miteinander verbunden sind.

9. Zahnstangenlenkung nach Anspruch 1, **dadurch gekennzeichnet, dass** das Axialwälzlager (9,10) in einer Sacklochbohrung (5.6) des Druckstückes (5) eingesetzt ist.

10. Zahnstangenlenkung nach Anspruch 1, **dadurch gekennzeichnet, dass** das Axialwälzlager (9,10) in eine durchgehende Bohrung (5.7) im Druckstück (5) eingepresst ist.

11. Zahnstangenlenkung nach Anspruch 1, **dadurch gekennzeichnet, dass** die Bestandteile (9.1, 9.2, 10.1, 10.2, 9.8, 9.11) der Axialwälzlager (9, 10) wenigstens teilweise durch einen spanlosen Formgebungsvorgang hergestellt sind.

12. Zahnstangenlenkung nach dem Oberbegriff von Anspruch 1, **dadurch gekennzeichnet, dass** das Druckstück (5) zwei gegenüberliegende, zu einander geneigte Tragflächen (5.1, 5.2) aufweist, wobei in den gegenüberliegenden Tragflächen (5.1, 5.2) des Druckstückes (5) wenigstens je ein Axialgleitlager (11) mit jeweils zwei Laufscheiben (11.1, 11.3) aufgenommen ist, dessen eine Laufscheibe (11.3) drehfest im Druckstück (5) gehalten ist und dessen andere drehbare Laufscheibe (11.1) gegenüber der Tragfläche (4.1, 4.2) der Zahnstange (4) unter einem bestimmten Winkel α geneigt verläuft, so dass zwischen der Tragfläche (4.1, 4.2) der Zahnstange (4) und der drehbaren Laufscheibe (11.1) ein Berührungspunkt (11.7) gebildet ist, wobei die drehbare Laufscheibe (11.1) pilzförmig mit einem Schaft (11.2) und einer konvexen Kalottenfläche ausgebildet ist, die drehfeste Laufscheibe als eine Büchse (11.3) ausgebildet ist, deren Boden (11.4) mit einem axial gerichteten Vorsprung (11.5) versehen ist, wobei der axial gerichtete Vorsprung (11.5) am Boden des Schaftes (11.2) anliegt und zwischen einer Mantelfläche des Schaftes (11.2) und der Büchse (11.3) Lagernadeln (11.6) angeordnet sind.

13. Zahnstangenlenkung für ein Kraftfahrzeug mit einem Lenkgehäuse (1), in dem eine Zahnstange (12) längsverschieblich gelagert ist, deren einer Verzahnung gegenüberliegender Rücken eine bogenförmige Gestalt aufweist ist und mit einem mit der Zahnstange (12) kämmenden Ritzel (3.1), sowie einem Druckstück (13), das auf der der Eingriffsseite mit dem Zahnritzel (3.1) gegenüberliegenden Seite der Zahnstange (12) angeordnet ist und eine Gegendruckfläche aufweist, die ohne zu gleiten auf der Zahnstange (12) abrollt, wobei das Druckstück (13) mit Hilfe einer Feder (7) in axialer Richtung gegen die Zahnstange (12) vorgespannt ist, **dadurch gekennzeichnet, dass** das Druckstück (13) zwei gegenüberliegende, zu einander geneigte Tragflächen (13.1, 13.2) aufweist, wobei in den Tragflächen (13.1, 13.2) wenigstens je ein Axialwälzlager (9) mit jeweils zwei Laufscheiben (9.1, 9.2) und einem dazwischen befindlichen Wälzkörpersatz (9.3) angeordnet ist, dessen eine Laufscheibe (9.2) drehfest im Druckstück (13) gehalten ist und dessen andere drehbare Laufscheibe (9.1) mit der Zahnstange (12) einen Berührungspunkt (9.5) bildet, wobei die drehbare Laufscheibe (9.1) kalottenförmig ausgebildet ist und mit ihrer konvexen Kalottenfläche punktförmig an der Tragfläche der Zahnstange (12) anliegt.

14. Zahnstangenlenkung nach Anspruch 13, **dadurch gekennzeichnet, dass** die Zahnstange (12) mit einer dem Profil der drehbaren Laufscheibe (9.1) angepaßten Längsausnehmung (12.1) versehen ist.

## Claims

1. Rack and pinion steering system for a motor vehicle, having a steering housing (1) in which a rack (4) is mounted so as to be longitudinally displaceable, the rack (4) having a prismatic form with two bearing faces (4.1, 4.2) which are inclined at an angle to the toothing plane and symmetrically with respect to the toothing, and having a pinion (3.1), which meshes with the rack (4), and a pressure piece (5) which is arranged on that side of the rack (4) which lies opposite the engagement side with the pinion (3.1) and has a back pressure face which rolls without sliding on the bearing faces (4.1, 4.2) of the rack (4), the pressure piece (5) being prestressed in the axial direction against the rack (4) with the aid of a spring (7), **characterized in that** the pressure piece (5) has two bearing faces (5.1, 5.2) which lie opposite one another and are inclined with respect to one another, at least in each case one axial roller bearing (9, 10) with in each case two runner plates (9.1, 9.2, 10.1, 10.2) and a rolling body set (9.3, 10.3) situated between them being arranged in the bearing faces (5.1, 5.2) of the pressure piece (5) which lie opposite one another, one runner plate (9.2, 10.2) of said axial roller bearing (9, 10) being held fixedly in the pressure piece (5) so as to rotate with it, and the other rotatable runner plate (9.1, 10.1) of said axial roller bearing (9, 10) extending inclined at a defined angle α with respect to the bearing face (4.1, 4.2) of the rack (4), with the result that a point of contact (9.5, 10.6) is formed between the bearing face (4.1, 4.2) of the rack (4) and the rotatable runner plate (9.1, 10.1), the rotatable runner plate (9.1, 10.1) being of spherical cap configuration and its convex spherical cap face being in punctiform contact with the bearing face (4.1, 4.2) of the rack (4).

2. Rack and pinion steering system according to Claim 1, **characterized in that** the rack (4) has a Y-shaped profile.

3. Rack and pinion steering system according to Claim 1, **characterized in that** the axial roller bearing is a ball bearing (9).

4. Rack and pinion steering system according to Claim 1, **characterized in that** the axial roller bearing is a needle bearing.

5. Rack and pinion steering system according to Claim 3, **characterized in that that** runner plate of the ball bearing (9) which is arranged fixedly in terms of rotation in the pressure piece (5) is configured as a sleeve (9.8) which engages around the runner plate (9.1) of spherical cap configuration with its edge (9.9).

6. Rack and pinion steering system according to Claim 4, **characterized in that** the axial roller bearing is configured as an axial angular contact needle bearing (10), the bearing needles (10.3) of which are guided in a cage (10.4).

7. Rack and pinion steering system according to Claim 3, **characterized in that** the rotatable runner plate (9.1) of the ball bearing (9) is of mushroom-shaped configuration with a stem (9.10) and a convex spherical cap face, the stem (9.10) being accommodated by a sleeve (9.11), the needle ring (9.12) of which surrounds the stem (9.10).

8. Rack and pinion steering system according to Claim 1, **characterized in that** the runner plates (9.1, 9.2) of the axial roller bearing (9) are connected to one another by a retaining element (9.4).

9. Rack and pinion steering system according to Claim 1, **characterized in that** the axial roller bearing (9, 10) is inserted into a blind hole (5.6) of the pressure piece (5).

10. Rack and pinion steering system according to Claim 1, **characterized in that** the axial roller bearing (9, 10) is pressed into a through hole (5.7) in the pressure piece (5).

11. Rack and pinion steering system according to Claim 1, **characterized in that** the component parts (9.1, 9.2, 10.1, 10.2, 9.8, 9.11) of the axial roller bearings (9, 10) are manufactured at least partially by a chipless shaping operation.

12. Rack and pinion steering system according to the preamble of Claim 1, **characterized in that** the pressure piece (5) has two bearing faces (5.1, 5.2) which lie opposite one another and are inclined with respect to one another, at least in each case one axial sliding bearing (11) with in each case two runner plates (11.1, 11.3) being accommodated in the bearing faces (5.1, 5.2) of the pressure piece (5) which lie opposite one another, one runner plate (11.3) of said axial sliding bearing (11) being held fixedly in the pressure piece (5) so as to rotate with it, and the other rotatable runner plate (11.1) of said axial sliding bearing (11) extending inclined at a defined angle α with respect to the bearing face (4.1, 4.2) of the rack (4), with the result that a point of contact (11.7) is formed between the bearing face (4.1, 4.2) of the rack (4) and the rotatable runner plate (11.1), the rotatable runner plate (11.1) being of mushroom-shaped configuration with a stem (11.2) and a convex spherical cap face, the runner plate which is fixed in terms of rotation being configured as a sleeve (11.3), the base (11.4) of which is provided with an axially oriented projection (11.5), the axially oriented projection (11.5) being in contact with the base of the stem (11.2), and bearing needles (11.6) being arranged between a circumferential surface of the stem (11.2) and the sleeve (11.3).

13. Rack and pinion steering system for a motor vehicle, having a steering housing (1) in which a rack (12) is mounted so as to be longitudinally displaceable, the back of said rack (12) which lies opposite a toothing system having an arcuate form, and having a pinion (3.1) which meshes with the rack (12), and having a pressure piece (13) which is arranged on that side of the rack (12) which lies opposite the engagement side with the pinion (3.1) and has a back pressure face which rolls without sliding on the rack (12), the pressure piece (13) being prestressed in the axial direction against the rack (12) with the aid of a spring (7), **characterized in that** the pressure piece (13) has two bearing faces (13.1, 13.2) which lie opposite one another and are inclined with respect to one another, at least in each case one axial roller bearing (9) with in each case two runner plates (9.1, 9.2) and a rolling body set (9.3) situated between them being arranged in the bearing faces (13.1, 13.2), one runner plate (9.2) of said axial roller bearing (9) being held fixedly in the pressure piece (13) so as to rotate with it, and the other rotatable runner plate (9.1) of said axial roller bearing (9) forming a point of contact (9.5) with the rack (12), the rotatable runner plate (9.1) being of spherical cap configuration and its convex spherical cap face being in punch form contact with the bearing face of the rack (12).

14. Rack and pinion steering system according to Claim 13, **characterized in that** the rack (12) is provided with a longitudinal recess (12.1) which is adapted to the profile of the rotatable runner plate (9.1)

## Revendications

1. Direction à crémaillère pour un véhicule automobile avec un boîtier de direction (1), dans lequel une crémaillère (4) est disposée de façon à pouvoir être déplacée dans la longueur, la crémaillère (4) possédant une forme prismatique avec deux surfaces portantes (4.1, 4.2) inclinées de façon symétrique par rapport à la denture sous un angle contre la zone de la denture, et avec un pignon (3.1) engrené avec la crémaillère (4) et un bloc de pression (5) situé du côté de la crémaillère. (4) qui est opposé au côté d'engrènement avec le pignon (3.1), et comportant une surface de contre-pression qui roule sur les surfaces portantes (4.1, 4.2) de la crémaillère (4) sans glisser, le bloc de pression (5) étant pré-tendu à l'aide d'un ressort (7) en direction axiale contre la crémaillère (4), **caractérisée en ce que** le bloc de pression (5) comporte deux surfaces portantes (5.1, 5.2) inclinées l'une vers l'autre et disposées face à face, chacune des surfaces portantes (5.1, 5.2) opposées du bloc de pression (5) comportant au moins un palier de roulement axial (9, 10) avec chacun deux rondelles de butée (9.1, 9.2, 10.1, 10.2) et entre elles un corps de roulement (9.3, 10.3), dont une rondelle de butée (9.2, 10.2) est maintenue en rotation solidaire dans le bloc de pression (5) et dont l'autre rondelle de butée (9.1, 10.1) rotative passe de façon inclinée en face de la surface portante (4.1, 4.2) de la crémaillère (4) sous un angle défini α de façon à former un point de contact (9.5, 10.6) entre la surface portante (4.1, 4.2) de la crémaillère (4) et la rondelle de butée rotative (9.1, 10.1), la rondelle de butée rotative (9.1, 10.1) ayant une forme de calotte et reposant sur la surface portante (4.1, 4.2) de la crémaillère (4) par un point avec sa surface de calotte convexe.

2. Direction à crémaillère selon la revendication 1, **caractérisée en ce que** la crémaillère (4) possède un profil en Y.

3. Direction à crémaillère selon la revendication 1, **caractérisée en ce que** le palier de roulement axial est un roulement à bille (9).

4. Direction à crémaillère selon la revendication 1, **caractérisée en ce que** le palier de roulement axial est un roulement à aiguilles.

5. Direction à crémaillère selon la revendication 3, **caractérisée en ce que** la rondelle de butée du roulement à bille (9) qui est en rotation solidaire dans le bloc de pression (5) est conçue comme une bague (9.8) qui entoure avec son bord (9.9) la rondelle de butée (9.1) en forme de calotte.

6. Direction à crémaillère selon la revendication 4, **caractérisée en ce que** le palier de roulement axial est conçu comme un roulement à aiguilles axial à contact oblique (10), dont les aiguilles de roulement (10.3) sont orientées vers une cage (10.4).

7. Direction à crémaillère selon la revendication 3,
**caractérisée en ce que** la rondelle de butée rotative (9.1) du roulement à bille (9) possède une forme de champignon, avec une tige (9.10) et une surface de calotte convexe, la tige (9.10) étant admise par une bague (9.11) qui entoure la tige (9.10) avec sa couronne à aiguilles (9.12).

8. Direction à crémaillère selon la revendication 1, **caractérisée en ce que** les rondelles de butée (9.1, 9.2) du palier de roulement axial (9) sont reliées entre elles par un élément de maintien (9.4).

9. Direction à crémaillère selon la revendication 1, **caractérisée en ce que** le palier de roulement axial (9, 10) est inséré dans un logement à fond plein (5.6) du bloc de pression (5).

10. Direction à crémaillère selon la revendication 1, **caractérisée en ce que** le palier de roulement axial (9, 10) est inséré dans un perçage traversant (5.7) dans le bloc de pression (5).

11. Direction à crémaillère selon la revendication 1, **caractérisée en ce que** les composants (9.1, 9.2, 10.1, 10.2, 9.8, 9.11) des paliers de roulement axial (9, 10) sont fabriqués au moins en partie au moyen d'un procédé de façonnage sans enlèvement de matière.

12. Direction à crémaillère selon le préambule de la revendication 1, **caractérisée en ce que** le bloc de pression (5) comporte deux surfaces portantes (5.1, 5.2) inclinées l'une vers l'autre et situées face à face, avec au moins un palier à glissement axial (11) admis par chacune des surfaces portantes opposées (5.1, 5.2) du bloc de pression (5), avec deux rondelles de butée chacun (11.1, 11.3), dont une rondelle de butée (11.3) est maintenue en rotation solidaire dans le bloc de pression (5) et dont l'autre rondelle de butée rotative (11.1) passe de façon inclinée en face de la surface portante (4.1, 4.2) de la crémaillère (4) sous un angle défini α de façon à créer un point de contact (11.7) entre la surface portante (4.1, 4.2) de la crémaillère (4) et la rondelle de butée rotative (11.1), cette rondelle de butée rotative (11.1) ayant une forme de champignon avec une tige (11.2) et une surface de calotte convexe, la rondelle de butée en rotation solidaire (11.3) étant conçue comme une bague dont le fond (11.4) comporte une saillie (11.5) en direction axiale, cette saillie en direction axiale (11.5) reposant sur le fond de la tige (11.2) et des aiguilles de roulement (11.6) étant situées entre une surface latérale de la tige (11.2) et la bague (11.3).

13. Direction à crémaillère pour un véhicule automobile avec un boîtier de direction (1), dans lequel se trouve une crémaillère (12) pouvant être déplacée dans la longueur, dont le dos opposé à la denture possède une forme arquée et comporte un pignon (3.1) engrené avec la crémaillère (12), ainsi qu'un bloc de pression (13) situé du côté de la crémaillère (12) qui est opposé au côté d'engrènement avec le pignon (3.1) et comportant une surface de contre-pression qui roule sur la crémaillère (12) sans glisser, le bloc de pression (13) étant pré-tendu en direction axiale contre la crémaillère (12) à l'aide d'un ressort (7), **caractérisée en ce que** le bloc de pression (13) comporte deux surfaces portantes (13.1, 13.2) inclinées l'une vers l'autre et situées face à face, avec au moins un palier de roulement axial (9) sur chacune des surfaces portantes (13.1, 13.2), possédant chacun deux rondelles de butée (9.1, 9.2) et entre elles un corps de roulement (9.3), dont une rondelle de butée (9.2) est maintenue en rotation solidaire dans le bloc de pression (13) et dont l'autre rondelle de butée rotative (9.1) forme un point de contact (9.5) avec la crémaillère (12), la rondelle de butée rotative (9.1) possédant une forme de calotte et reposant sur la surface portante de la crémaillère (12) par un point avec sa surface de calotte convexe.

14. Direction à crémaillère selon la revendication 13, **caractérisée en ce que** la crémaillère (12) comporte une entaille longitudinale (12.1) adaptée au profil de la rondelle de butée rotative (9.1).
